# FASCICULE DE BREVET EUROPEEN

(11) **EP 1 678 101 B1**
(45) Date de publication et mention de la délivrance du brevet: **22.02.2017**
(21) Numéro de dépôt: 04805721.0
(22) Date de dépôt: 01.10.2004
(51) Int. Cl.: C04B 28/02, C04B 28/04

(54) **PRODUIT CIMENTAIRE EN PLAQUE, ET PROCEDE DE FABRICATION**
FLÄCHIGES ZEMENTPRODUKT UND HERSTELLUNGSVERFAHREN DAFÜR
CEMENT SHEET PRODUCT AND PRODUCTION METHOD THEREOF

(30) Priorité: 02.10.2003 FR 0311579; 24.10.2003 US 691638
(43) Date de publication de la demande: 12.07.2006
(73) Titulaire: Saint-Gobain Materiaux de Construction S.A.S, 92400 Courbevoie (FR)
(72) Inventeur: FAMY, Charlotte, F-60500 Chantilly (FR); CADORET, Gael, F-75007 Paris (FR); HOUANG, Paul, F-75116 Paris (FR); APARECIDO ZAMPIERI, Valdir, Jundiai, Sao Paulo (BR)
(74) Mandataire: Saint-Gobain Recherche
(86) Numéro de dépôt international: PCT/FR2004/050478
(87) Numéro de publication internationale: WO 2005/033043

(56) Documents cités:
- EP-A- 0 846 666
- EP-A- 1 362 937
- WO-A-02/070425
- US-A- 5 795 515

## Description

La présente invention se rapporte au domaine de la fabrication de produits à base de ciment (généralement du ciment Portland) ou autre liant hydraulique armé ou renforcé de fibres. Elle concerne plus particulièrement la fabrication de produits en feuille ou en plaque, utilisables comme éléments de construction, notamment comme clins, éléments de bardages ou de cloisons.

La fabrication de ces produits se fait couramment selon une technologie dite papetière par voie humide, qui tire profit de la présence des fibres dans le mélange. Cette technique consiste à former une feuille qui s'apparente à un papier, par filtration à partir d'une suspension aqueuse fluide obtenue par mélange essentiellement de ciment, de fibres et d'eau, la feuille ou éventuellement une superposition de feuilles étant ensuite essorée par succion et/ou pression. Les fibres, généralement de cellulose, se fixent sur le filtre en constituant un tamis supplémentaire ou armature de filtration, dont les mailles ont une taille apte à retenir les particules même fines de ciment ou d'autre liant ou additif ainsi qu'une part importante d'eau contribuant à la cohésion de l'épaisseur en formation sur le tamis.

Suivant une technique particulière, le filtre est constitué par un tambour recouvert d'une toile filtrante installé dans une cuve contenant la suspension : le tambour étant mis en rotation dans la cuve, la pression hydrostatique force une partie de l'eau à traverser la toile alors que les solides que sont notamment les fibres de cellulose, les particules de ciment et d'autres additifs s'accumulent sur le tamis du tambour en une couche fine dont l'épaisseur augmente avec la rotation du tambour. C'est la technique dite de Hatschek.

Cette technique permet de fabriquer différents types de produits tels que panneaux de toiture, clins, éléments de bardages, etc., ces différents types de produits devant chacun répondre à des exigences particulières. Ainsi, les produits de toiture doivent principalement présenter de bonnes propriétés de résistance mécanique tandis que les clins, éléments de bardages ou de cloisons destinés à être cloués présentent généralement des propriétés de résistance mécanique un peu moins élevées en même temps que des caractéristiques de stabilité dimensionnelle (valeurs de retrait) plus strictes (pour éviter notamment l'apparition de fissurations au niveau des clous).

Le recours à une étape d'autoclavage, à température élevée (supérieure à 150°C) et à forte pression (à la pression de saturation de l'ordre de quelques bars), sur les produits issus du procédé Hatschek permet généralement de limiter les caractéristiques de retrait (faible variation longitudinale en fonction de la variation du taux d'humidité). Si de bons produits de toiture, moins stricts en termes de performances de stabilité dimensionnelle, ont pu être obtenus sans recourir à cette opération d'autoclavage, il n'a jusqu'à présent pas été possible d'obtenir de bons produits utilisables comme clins ou éléments de bardages ou de cloisons par la technique Hatschek sans recourir à une étape d'autoclavage ou sans utiliser de formulations complexes, contraignantes en terme de maintenance ou coûteuses.

Le document WO 02/070425 A divulgue des formulations de fibro-ciments pouvant être obtenues par le procédé Hatschek, Mazza ou par extrusion. La problématique de ce document est centrée sur la réduction des temps de prise des ciments fibrés ou non. La solution proposée consiste à utiliser des hydrates de silicate de calcium. Ce document ne divulgue pas une composition comprenant notamment 30 à 70 % de carbonate de calcium et des fibres synthétiques.

Le document EP 1 362 937 A divulgues des fibres de renforcement biocomposantes permettant d'améliorer la résistance à la fissuration des produits fibre-ciment, mais sans conténir 30 à 70 % de carbonate de calcium et sans lier aucun avantage à la présence dudit carbonate de calcium.

Les documents EP 0 537 129 A et EP 0 363 891 A divulguent aussi des compositions de fibro-ciments, mais comprenant plus de 63 % de ciment et moins de 20 % de carbonate de calcium.

Le but de la présente invention a donc été de mettre au point un nouveau produit susceptible d'être obtenu, à moindre coût, par le procédé Hatschek et sans autoclavage, ce produit présentant des propriétés mécaniques et/ou des performances de stabilité dimensionnelle satisfaisantes, en particulier appropriées pour son utilisation en tant que clin, élément de bardage ou de cloison.

Ce but a été atteint par le produit selon l'invention, ce produit se présentant en particulier sous forme de plaque, étant susceptible d'être obtenu par le procédé Hatschek et sans autoclavage, et étant susceptible d'être utilisé comme clin, élément de bardage ou de cloison, ledit produit comprenant au moins du ciment à des taux compris entre 18 et 55 %, au moins du carbonate de calcium à des taux compris entre 30 et 70 % et au moins des fibres synthétiques telles que des fibres d'alcool polyvinylique ou de polyoléfine.

Par «fibres synthétiques», on entend, par opposition à des fibres naturelles telles que des fibres de cellulose, des fibres obtenues par synthèse (impliquant une réaction chimique contrôlée par l'homme), notamment des fibres organiques, en particulier issues de dérivés du pétrole, ces fibres étant généralement fusibles et étant formées d'au moins un polymère, en particulier thermoplastique, tel qu'un alcool polyvinylique (ou polyalcool vinylique) ou une polyoléfine. De préférence, ces fibres sont des fibres d'alcool polyvinylique (PVA) ou avantageusement des fibres de polypropylène (PP), ou éventuellement des fibres de polyéthylène (PE).

Le produit selon l'invention est susceptible d'être obtenu par le procédé Hatschek, c'est-à-dire à partir d'un matériau en feuille, obtenu notamment par filtration, sur un tamis ou filtre, d'une suspension aqueuse (cette suspension comprenant dans la présente invention les constituants définis ci-avant, c'est à-dire au moins un liant hydraulique, une charge et des fibres synthétiques comme précédemment définis), des épaisseurs dudit matériau en feuille ainsi constitué étant le cas échéant superposées jusqu'à obtention de l'épaisseur finale voulue, afin d'obtenir une plaque. La plaque peut en outre être essorée par succion et/ou être pressée (notamment pour ajuster la densité et/ou imprimer un motif décoratif), par exemple par un cylindre format (généralement sur lequel sont superposées les feuilles de matière apportées par le feutre et enroulées sur ce cylindre) ou une presse mécanique statique, et/ou subir une étape de mûrissement, généralement dans une étuve à basse température (par exemple de l'ordre de 60°C) et/ou à l'air libre. Le produit selon l'invention présente avantageusement les propriétés recherchées sans nécessiter de recours à une étape d'autoclavage.

Le produit selon l'invention, obtenu ainsi sous forme généralement de plaque issue d'une ou plusieurs feuilles formées par filtration d'une suspension aqueuse selon la description précédente, est donc formé d'une matrice cimentaire armée de fibres, cette matrice incluant les constituants mentionnés dans la définition de l'invention, cette matrice ou ce produit pouvant éventuellement être pourvu d'autres éléments, en particulier rapportés sur la plaque obtenue selon le procédé précédent, tels que des décorations (couche de peinture, impression, etc.), des fixations, etc.

Conformément à la définition de l'invention, le produit selon l'invention comprend au moins un liant hydraulique tel que du ciment ; il s'agit en général de ciment Portland. Le taux dudit liant ou ciment dans la suspension utilisée pour obtenir le produit comme précédemment explicité est préférentiellement compris entre 18 et 75% en poids, avantageusement entre 18 et 65%, par rapport au poids total de matière sèche (les valeurs ou taux en poids ci-après, dans la suspension, étant toujours donnés en poids de matière sèche par rapport au poids total de matière sèche).

Le produit selon l'invention comprend également des fibres synthétiques tells que mentionnées précédemment. Avantageusement ces fibres sont présentes à un taux compris entre 0.5 et 10 % en poids dans la suspension, et peuvent se présenter sous forme plus ou moins dispersée ou liée. De préférence, ces fibres sont choisies de façon à présenter un diamètre de 5 à 16 µm (généralement de 10 à 15 µm) et sont des fibres courtes (de longueur inférieure à quelques centimètres), en particulier sont choisies de façon à présenter une longueur de 3 à 15 mm (par exemple de 3 à 8 mm, voire 4 à 7 mm, pour les fibres de PVA, et de 5 à 15 mm, voire de 6 à 12 mm, pour les fibres de PP). De préférence également, ces fibres sont choisies de façon à présenter une contrainte à la rupture en traction (ou ténacité) d'au moins 400 MPa (en particulier d'au moins 500 MPa pour les fibres de PP et d'au moins 800 MPa, voire 900 Mpa, pour les fibres de PVA), un module d'Young d'au moins 4 GPa (en particulier d'au moins 6 GPa pour les fibres de PP et d'au moins 20 GPa pour les fibres de PVA) et une déformation comprise entre 6 et 40% (en particulier entre 6 et 12%, voire entre 7 et 11%, pour les fibres de PVA et entre 15 et 25%, voire entre 17 et 20%, pour les fibres de PP), ces valeurs étant mesurées selon la norme DIN 53816.

Généralement, le produit selon l'invention comprend également, en combinaison avec les fibres précédentes, au moins des fibres végétales, notamment de cellulose, en particulier blanchies ou écrues (non blanchies), de préférence raffinées à un degré SR (ou Schopper) de l'ordre de 40 à 70, voire de 55 à 65, en particulier de pinus, mais aussi de sisal, ou autre, le taux total de fibres (incluant les fibres synthétiques et les fibres de cellulose éventuelles) n'excédant pas de préférence 10% en poids dans la suspension.

Une partie du ciment peut également être remplacée par au moins une matière réactive susceptible de réagir avec le ciment, avec formation notamment de silicate de calcium, en particulier par au moins une pouzzolane ou une matière à réactivité pouzzolanique. Cette pouzzolane (ou matière à réactivité pouzzolanique) est préférentiellement choisie parmi les aluminosilicates, calcium aluminosilicates et la silice amorphe, et de façon particulièrement préféré, est du métakaolin qui est une forme déshydroxylée de silicate d'aluminium, ou des cendres volantes de centrale thermique qui sont des matières de type aluminosilicates, calcium aluminosilicates (type F ou C selon la norme ASTM C618), ou un autre matériau réactif de type cendres de cosses de riz qui sont à base d'une forme amorphe de silice, ou un laitier (de haut fourneau) issu de la fabrication de la fonte, qui est un matériau de type calcium aluminosilicate, ou encore des pouzzolanes naturelles comme des roches ou des cendres volcaniques, du tuf, du trass, de la silice fossile ou du 'kiesselguhr'.

De préférence, cette pouzzolane, utilisée sous forme de poudre, présente une granulométrie caractérisée par un diamètre moyen (D50) supérieur à 1 µm et inférieur ou égal à 50 µm, avantageusement de l'ordre de 10 à 30 µm. Cette poudre présente également généralement une surface spécifique de l'ordre de 10 à 50 m²/g (mesurée par la méthode BET).

Avantageusement, le taux total de ciment (ou liant) et de pouzzolane (ou matière à activité pouzzolanique) éventuelle n'excède pas 75% en poids, de préférence n'excède pas 65% en poids et de façon particulièrement préférée n'excède pas 60% en poids dans la suspension, le rapport en poids dudit ciment sur ladite pouzzolane étant de préférence supérieur ou égal à 2. Le mode de réalisation combinant (parmi les constituants définis selon l'invention) le ciment à la pouzzolane privilégie pour le produit final l'obtention de propriétés mécaniques améliorées tout en permettant d'avoir des performances de stabilité dimensionnelle relativement satisfaisantes. Parallèlement, à la fois de bons résultats en terme de stabilité dimensionnelle et des résultats tout à fait satisfaisants en terme de propriétés mécaniques sont obtenus, indépendamment de la présence ou non de pouzzolane, lorsque que l'on combine un taux de ciment limité (compris entre 18 et 55% et de préférence compris entre 20 et 50%) à un taux de carbonate de calcium (ou charge) plutôt élevé (compris entre 30 et 70% et de préférence compris entre 35 et 65%), comme illustré ultérieurement.

Le produit selon l'invention peut également inclure des additifs, tels que du kaolin et/ou des floculants et/ou autres adjuvants de la suspension aqueuse, etc.

Dans une forme de réalisation particulièrement préférée, la suspension comprend :
- de 20 à 50% en poids de liant hydraulique (ou ciment), avantageusement de 25 à 45% ;
- de 35 à 65% en poids de charge minérale inerte ou de faible réactivité (ou carbonate de calcium), avantageusement de 38 à 62% ;
- de. 2 à 10% en poids de fibres, dont au moins une partie sont des fibres synthétiques ; avantageusement de 3 à 8% ;
- de 0 à 30% en poids de pouzzolane (ou matière à réactivité pouzzolanique), avantageusement de 0 à 25% ;
- de 0 à 10% en poids d'additifs, notamment de 0 à 5% ; le taux de liant (ou ciment) et de pouzzolane étant de préférence inférieur à 60% et le rapport du ciment sur la pouzzolane étant supérieur ou égal à 2.

De préférence, le taux de fibres synthétiques est d'au moins 1 % en poids dans la suspension ou d'au moins 25% en poids par rapport au poids total des fibres (les autres fibres éventuelles étant avantageusement des fibres de cellulose), et de façon particulièrement préférée le taux de fibres synthétiques représente de 1 à 5%, voire de 1.5 à 4%, en poids dans la suspension.

Le produit selon l'invention est avantageusement sous la forme (ou destiné à être utilisé comme) d'un clin, d'un élément de bardage ou d'un élément de cloison.

L'invention a également pour objet un procédé de fabrication du produit selon l'invention, caractérisé en ce que l'on prépare un matériau en feuille par filtration, sur un tamis ou filtre, d'une suspension aqueuse telle que précédemment définie, on superpose le cas échéant des épaisseurs dudit matériau en feuille jusqu'à obtention de l'épaisseur finale voulue pour donner une plaque, et éventuellement on soumet la plaque à un essorage par succion et/ou pressage mécanique (sous cylindre format et/ou sous presse) et/ou à une étape de mûrissement, généralement à quelques dizaines de degrés (par exemple 60°C) en étuve pendant quelques heures (par exemple 8 heures) et/ou à l'air libre.

Eventuellement, la plaque peut subir d'autres traitements, par exemple peut être mise en forme et/ou imprimée et/ou décorée, par exemple peut être moulée, notamment lorsqu'elle est encore sous forme malléable (par exemple pendant le pressage), en particulier pour obtenir une plaque ondulée ou non plane, présentant un aspect bois, etc.

Les exemples suivants illustrent deux formulations de produits selon l'invention, ainsi que les propriétés mécaniques et de stabilité dimensionnelle desdits produits.

### Exemple 1

Dans cet exemple, la matrice est réalisée à partir de la composition suivante en poids de matière sèche :
- 34.7% de ciment Portland normalisé CEM I 52.5,
- 60% de carbonate de calcium,
- 2.3% de fibres de PVA fournies par la société Lanzhou,
- et 3% de fibres de cellulose blanchie pinus à 60 degrés Shopper.

### Exemple 2

Dans cet exemple, la matrice est réalisée à partir de la composition suivante en poids de matière sèche :
- 39.7% de ciment Portland normalisé CEM I 52.5,
- 40% de carbonate de calcium,
- 2.3% de fibres de PVA fournies par la société Kuraray,
- 3% de fibres de cellulose blanchie pinus à 60 degrés Shopper,
- et 15% de cendres volantes vendues par la société Pozo Fly Comercio de Cinzas Lima Ltda.

### Fabrication des échantillons

Les plaques de fibro-ciment sont fabriquées par le procédé Hatschek.

En particulier, on prépare une suspension aqueuse diluée (la dilution étant par exemple de l'ordre de 50 à 200 g de matière sèche par litre d'eau, comme habituel par la technique Hatschek) des compositions indiquées ci-dessus, en ajoutant 0.04% de floculant polyacrylamide anionique par rapport au poids de matière sèche des constituants ci-dessus.

Les plaques fabriquées présentent une longueur de l'ordre de 2.5 à 3.6 m, une largeur de 1.2 à 1.5 m et une épaisseur de 8 mm environ. Elles sont constituées de plusieurs monocouches superposées à l'état frais (généralement entre 7 et 9 monocouches) obtenues en utilisant la suspension diluée de fibro-ciment précédemment décrite dans la ligne Hatschek mentionnée ci-dessus, ces monocouches étant superposées pour former une plaque, et cette dernière étant pressée sous cylindre-format afin de retirer une certaine quantité d'eau et d'augmenter l'adhésion des monocouches entre elles.

### Cure (mûrissement) :

Les plaques pressées sont curées (mûries) dans une étude à 60°C et 100% d'humidité relative pendant 8 heures. Les plaques sont ensuite stockées pendant 28 jours pour terminer leur mûrissement. A la fin du mûrissement, les plaques sont découpées et caractérisées comme suit.

### Caractérisation :

La caractérisation des plaques se fait en s'inspirant des procédures spécifiées dans la norme ISO 8336.

### - Détermination de la résistance en flexion (trois points) ou MOR (modulus of rupture) :

Les résistances en flexion sont déterminées d'une part sur des éprouvettes immergées 24 heures dans de l'eau à 20°C (MOR saturé) et d'autre part sur des éprouvettes séchées dans une atmosphère de laboratoire à 20°C et 60% d'humidité relative (MOR sec). La valeur finale de résistance en flexion est une moyenne sur 10 éprouvettes. La résistance en flexion est considérée comme suffisante pour l'utilisation comme clin, élément de bardage ou de cloison quand la valeur de MOR saturé est supérieure à 7 Mpa et quand la valeur de MOR sec est supérieure à 10 MPa.

### - Retrait ou « moisture movement » :

La longueur de l'éprouvette est mesurée après son immersion dans l'eau pendant 48 heures et après son séchage à 105°C dans une enceinte climatique. La mesure de longueur de l'éprouvette séchée à 105°C se fait quand la masse de l'éprouvette est constante à 0.1% près. La valeur de retrait finale est une valeur moyenne de trois éprouvettes. La valeur de retrait est considérée comme particulièrement satisfaisante pour l'utilisation comme clin, élément de bardage ou de cloison quand elle est inférieure ou égale à 0.2 %.

Les résultats des évaluations sont reportés dans le tableau 1 ci-après.

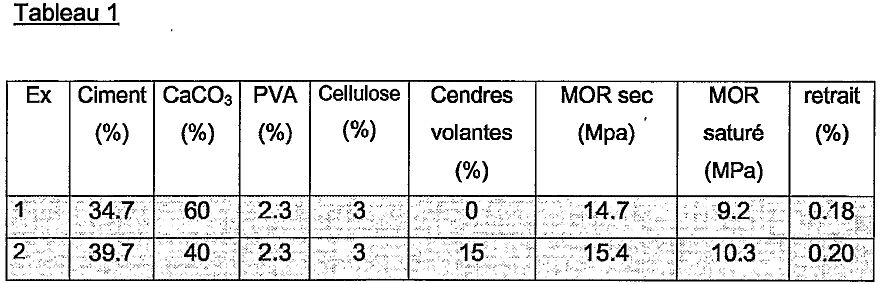

Les plaques préparées avec les formulations 1 et 2 ont des performances de retrait tout à fait satisfaisantes pour leur utilisation en tant que clins, éléments de bardages ou de cloisons, de même que de bonnes performances mécaniques, également satisfaisantes pour leur utilisation en tant que clins, éléments de bardages ou de cloisons.

Le produit selon l'invention peut servir comme clin, élément de bardage ou de cloison, ou autre, peut être plan ou ondulé, etc.

## Revendications

1. Produit, en particulier en plaque, susceptible d'être obtenu par le procédé Hatschek et sans autoclavage, et susceptible d'être utilisé comme clin, élément de bardage ou de cloison, ce produit comprenant au moins du ciment, dont le taux est compris entre 18 et 55 %, au moins du carbonate de calcium, dont le taux est compris entre 30 et 70 %, et au moins des fibres synthétiques,

2. Produit selon la revendication 1, **caractérisé en ce qu'**il comprend en outre au moins une pouzzolane ou matière à réactivité pouzzolanique, de préférence choisie parmi des aluminosilicates, calcium aluminosilicates et de la silice amorphe.

3. Produit selon l'une des revendications 1 ou 2, **caractérisé en ce qu'**il comprend en outre des fibres végétales, telles que des fibres de cellulose.

4. Produit selon l'une des revendications précédentes, **caractérisé en ce qu**'il est obtenu à partir d'une suspension comprenant en poids de matière sèche:
- de 20 à 50 % en poids de ciment;
- de 35 à 65% en poids de carbonate de calcium ;
- de 2 à 10% en poids de fibres, dont au moins une partie sont des fibres synthétiques;
- de 0 à 30% en poids de pouzzolane ;
- de 0 à 10% en poids d'additifs.

5. Produit selon la revendication 4, **caractérisé en ce que** le taux de fibres synthétiques est d'au moins 1 % en poids par rapport au poids total de matière sèche ou d'au moins 25 % en poids par rapport au poids total des fibres.

6. Produit selon l'une quelconque des revendications précédentes, **caractérisé en ce qu**'il est sous la forme d'un clin ou élément de bardage ou de cloison.

7. Procédé de fabrication d'un produit selon l'une quelconque des revendications précédentes, par filtration d'une suspension aqueuse comprenant au moins du ciment, du carbonate de calcium des fibres synthétiques et éventuellement superposition des épaisseurs du matériau en feuille ainsi constitué jusqu'à obtention de l'épaisseur finale voulue, afin d'obtenir une plaque.

8. Procédé selon la revendication 7, **caractérisé en ce que** la plaque est essorée et/ou pressée et/ou soumise à une étape de mûrissement.

## Patentansprüche

1. Produkt, insbesondere als Platte, welches durch das Hatschek-Verfahren und ohne Autoklavierung erhalten werden kann, und als Profil, Verkleidungs- oder Wandelement verwendet werden kann, wobei das Produkt mindestens Zement, dessen Gehalt zwischen 18 und 55 % liegt, mindestens Calciumcarbonat, dessen Gehalt zwischen 30 und 70 % liegt, und mindestens synthetische Fasern umfasst.

2. Produkt nach Anspruch 1, **dadurch gekennzeichnet, dass** dieses außerdem mindestens ein Puzzolan oder Material mit Puzzolan-Reaktivität, vorzugsweise ausgewählt aus Aluminosilikaten, Calciumalumininosilikaten und amorphem Silicium, umfasst.

3. Produkt nach einem der Ansprüche 1 oder 2, **dadurch gekennzeichnet, dass** dieses außerdem pflanzliche Fasern, wie Cellulosefasern, umfasst.

4. Produkt nach einem der vorhergehenden Ansprüche, **dadurch gekennzeichnet, dass** dieses aus einer Suspension erhalten wird, die, bezogen auf das Gewicht der Trockenmasse, umfasst:
- 20 bis 50 Gew.-% Zement;
- 35 bis 65 Gew.-% Calciumcarbonat;
- 2 bis 10 Gew.-% Fasern, von denen mindestens ein Teil synthetische Fasern sind;
- 0 bis 30 Gew.-% Puzzolan;
- 0 bis 10 Gew.-% Additive.

5. Produkt nach Anspruch 4, **dadurch gekennzeichnet, dass** der Gehalt synthetischer Fasern mindestens 1 Gew.-%, bezogen auf das Gesamtgewicht der Trockenmasse, oder mindestens 25 Gew.-%, bezogen auf das Gesamtgewicht der Fasern, beträgt.

6. Produkt nach einem der vorhergehenden Ansprüche, **dadurch gekennzeichnet, dass** es in Form eines Profils oder Verkleidungs- oder Wandelements vorliegt.

7. Verfahren zur Herstellung eines Produkts nach einem der vorhergehenden Ansprüche, durch Filtration einer wässerigen Suspension, die mindestens Zement, Calciumcarbonat und synthetische Fasern umfasst, und gegebenenfalls Übereinanderlegen von Schichtdicken des so gebildeten Mattenmaterials bis zum Erhalt einer gewünschten Endschichtdicke, um eine Platte zu erhalten.

8. Verfahren nach Anspruch 7, **dadurch gekennzeichnet, dass** die Platte getrocknet und/oder gepresst und/oder einem Reifungsschritt unterzogen wird.

## Claims

1. A product, in particular a board, able to be obtained by the Hatschek process and without autoclaving, and being able to be used as weatherboard, cladding element or partition element, this product comprising at least one cement of content between 18% and 55%, at least one calcium carbonate of content between 30 % and 70%, and at least synthetic fibers.

2. The product as claimed in claim 1, **characterized in that** it furthermore includes at least one pozzolan or material capable of undergoing a pozzolanic reaction, preferably chosen from aluminosilicates, calcium aluminosilicates and amorphous silica.

3. The product as claimed in either of claims 1 and 2, **characterized in that** it furthermore includes plant-based fibers, such as cellulose fibers.

4. The product as claimed in one of the preceding claims,
**characterized in that** it is obtained from a suspension comprising, by weight of dry matter:
- from 20 to 50% by weight of cement;
- from 35 to 65% by weight of calcium carbonate;
- from 2 to 10% by weight of fibers, at least some of which are synthetic fibers;
- from 0 to 30% by weight of pozzolan;
- from 0 to 10% by weight of additives.

5. The product as claimed in claim 4, **characterized in that** the content of synthetic fibers is at least 1% by weight relative to the total weight of dry matter or at least 25% by weight relative to the total weight of fibers.

6. The product as claimed in any one of the preceding claims, **characterized in that** it is in the form of a weatherboard or a cladding element or a partition element.

7. A process for manufacturing a product according to any one of the preceding claims by filtration of an aqueous suspension comprising at least one cement, calcium carbonate and synthetic fibers and optionally by superposition of the thicknesses of the sheet material thus formed until the final desired thickness is obtained, in order to obtain a board.

8. The process as claimed in claim 7, **characterized in that** the board is drained and/or pressed and/or subjected to a curing step.
